# EUROPEAN PATENT APPLICATION

(11) **EP 0 761 603 A1**
(43) Date of publication of application: **12.03.1997**
(21) Application number: 96113527.4
(22) Date of filing: 23.08.1996
(51) Int. Cl.: C02F 1/463, C02F 1/52, C02F 1/02, C02F 9/00

(54) **Method and apparatus for waste water treatment after polishing semiconductor wafers**

(30) Priority: 29.08.1995 US 2912
(71) Applicant: IMEC vzw, B-3001 Leuven Heverlee (BE)
(72) Inventor: Pardon, Alain, 3201 Langdorp (BE); Lievens, Patrick, 3300 Tienen (BE)
(74) Representative: Bird, Ariane

(57) **Abstract**

The present invention includes use of an electrolytically assisted coagulation step (8) in the separation of fine particles of abrasive materials in suspension from spent slurry from a process (1) of polishing semiconductor substrates, e.g. CMP. The coagulation step (8) may be optionally followed by flocculation. It has been determined experimentally that the method in accordance with the invention separates solids including metals in suspension from the slurry with a very high efficiency. Further, large flows of spent slurry may be treated at high speeds. If large amounts of slurry have to be treated, separation of the solids may be performed by gravimetric separation (22), centrifuging or conventional chamber filters. A continuous process can be achieved as a double-batch or multi-batch process using two or more reactor cells in parallel. Apparatus (33) for carrying out the invention is also described.

## Description

### Background of the invention

The present invention relates to a method and apparatus for treatment of waste water after polishing or planarizing ceramic or glass-like materials, in particular semiconductor wafers in the manufacture of integrated circuits such as silicon or germanium arsenide wafers or similar. In particular the present invention relates to a method and an apparatus for the treatment of waste slurries from Chemical Mechanical Polishing (CMP).

In the preparation of ceramic and glass surfaces it is known to use abrasive and polishing slurries consisting of a fine abrasive material and a liquid such as water or alkaline ammonium hydroxide solutions. Such slurries may contain particles of tungsten carbide, silica, aluminium oxide, zirconium oxide, ceramics etc. Further, in the process of manufacturing semiconductor devices, e.g. integrated circuits, one of the process steps involves polishing a semiconductor wafer, or a wafer with a stack of dielectric, e.g. oxide, or metallic layers on the wafer. In such polishing steps use is made of liquids, with a broad range of both acidic and basic pH values, containing suspended solids known as a slurry. The particles are typically fumed silica or fumed aluminium oxide. The diameter of the particles in the slurry depends upon the required smoothness of the final product. The prevailing method for planarizing semiconductor wafers is chemical mechanical planarization or polishing (CMP). The most common abrasive material used with CMP is silica.

Recent reviews of CMP have been published in the following issues of the journal "Solid State Technology": May 1994, pages 26 to 31; July 1994, pages 71 to 75; October, 1994, pages 63 to 70; April 1995, pages 47 to 52; June 1995, pages 109 ff.; July 1995, pages 81 to 88 all of which are incorporated herein by reference. In CMP, it is known to use liquids with abrasive particles in colloidal suspension, the particles having diameters of less than 0.5 µm. It is known to use a slurry as polishing liquid having amorphous silica particles or other solids such as tungsten carbide or aluminium oxide in suspension at concentrations of the order of 20% by weight or lower. The small diameter of the particles and the selection of the pH of the slurry keep the solids in suspension. Typically, deionised water is used as the liquid. During the polishing step, the polishing liquid may become contaminated with semiconductive materials, metals, polymers, ceramics and glasses.

The disposal of the spent slurry after polishing is an environmental problem which is gaining in importance. Conventionally, three objectives should be met in a satisfactory slurry disposal scheme: neutralisation of pH of the spent slurry; neutralisation of oxidising or reducing agents in the spent slurry; and removal of suspended materials from the spent slurry.

A known commercially available technique for treating such fine slurries is ultra-filtration. Filtration of the solids in the spent slurry is extremely difficult due to the size of the particles, for which many fine or coarse filters are not suitable.

Gravimetric separation is not suitable due to the electrical surface charge on particles in suspension, e.g. in particulate colloids.

Methods making use of a neutralisation step (neutralisation of pH) before removal of solids from the spent slurry result in gel formation due to agglomeration and settlement of the solids. Finally, components of the spent slurry can interfere with precipitation processes used to treat spent slurry.

EP-A-0 605 882 describes a method and apparatus for wet treatment of solid surfaces in which water is electrolysed in a tank which is partitioned by a porous membrane into an anode and a cathode chamber. Water containing fresh H⁺ ions is produced in the anode chamber and water containing fresh OH⁻ ions in the cathode chamber. The anodic and cathodic water are discharged separately from the electrolysis cell and used selectively to wet treat the object concerned. An electrolysis aid may be added to the water or the water may be irradiated to improve efficiency.

An object of the present invention is to provide an apparatus and a method for treating spent slurry from polishing operations which avoid the problems with the prior known methods and apparatus.

A further object of the present invention is to provide an apparatus and a method for treating spent slurry from chemical mechanical polishing (CMP) operations in the process of manufacture of semiconductor devices such as integrated circuits.

Another object of the present invention is to provide a method of separating out the liquid component and/or the abrasive particle contant of a spent polishing slurry in sufficient purity as to be suitable for recycling to the polishing operations, in particular CMP.

### Summary of the invention

The present invention provides a method of separating a liquid and fine particles of abrasive materials from a spent slurry from a process of polishing semiconductor substrates, said slurry including the liquid and a solid content including at least some of the abrasive particles in suspension, comprising the the steps of:
step 1: electrolytic coagulation of the solid content of said slurry, and
step 2: separation of the coagulated solids from a recovered liquid part of the slurry.

In accordance with the invention at least one eletrolytically soluble electrode or electrolytically soluble intermediate electrode may be used in the electrolytic coagulation step.

The present invention also provides an apparatus for separating a liquid and fine particles of abrasive materials from a spent slurry from a process of polishing semiconductor substrates, said slurry including the liquid and a solid content including some of the abrasive particles in suspension comprising: an electrolysis cell including at least one electrode or intermediate electrode having at least electrolytically soluble parts for electrolysing and for electrocoagulating said spent slurry, and a settling tank for separating the coagulated solids from the slurry.

The present invention includes use of an electrolytically assisted coagulation step in the separation of fine particles of abrasive materials from spent slurry from a process of polishing semiconductor substrates, e.g. CMP. The coagulation step may be optionally followed by flocculation. It has been determined experimentally that the method in accordance with the invention separates solids including metals in suspension from the slurry with a very high efficiency. Further, large flows of spent slurry may be treated at high speeds. If large amounts of slurry have to be treated, separation of the solids may be performed by gravimetric separation, centrifuging or conventional chamber filters. A continuous process can be achieved as a double-batch or multi-batch process using two or more reactor cells in parallel. This is possible because of the high speed of the coagulation step.

### Brief description of the drawings

Figure 1 shows a schematic diagram of a slurry treatment and water and/or abrasive recycling plant in accordance with the present invention;
Figure 2 shows a schematic arrangement for batch processing in accordance with the present invention;
Figure 3 shows a schematic diagram of a second embodiment of the present invention; and
Figure 4 shows a graph of time versus current for an electrolysis cell reactor in accordance with the present invention.

### Description of the preferred embodiments

In the following the present invention will be described with respect to certain specific embodiments. The invention is not limited thereto but only by the claims. Further, the present invention will be described mainly with reference to CMP using silica containing polishing liquids. The present invention is not limited thereto. In particular, other abrasive materials may be used as known to a person skilled in the art.

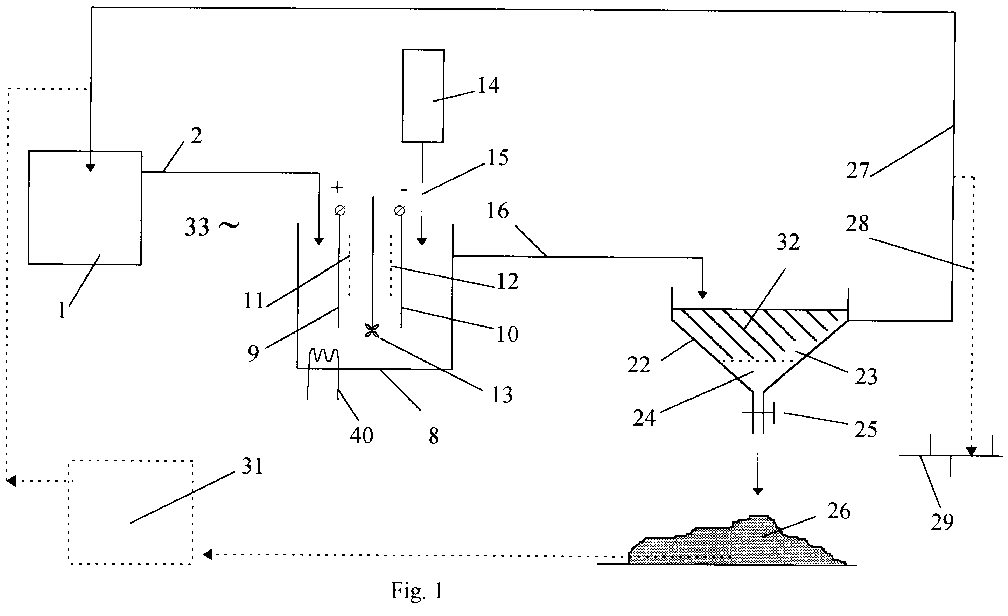

Fig. 1 shows a schematic diagram of a slurry treatment apparatus 33 in accordance with a first embodiment of the present invention. The necessary pumps, valves and gas extraction equipments are not shown. A CMP processing unit 1 uses a slurry including a liquid, in particular de-ionised water, containing abrasive/polishing particles such as very fine silica to polish objects, in particular semiconductive wafers such as silicon wafers. Spent slurry consists of a liquid phase and a solids content. The solids content includes the abrasive particles of the polishing slurry and abraded material in particulate form removed from the semiconductor wafer, which may include metal from wiring layers, insulating materials such as silicon nitride and doped semiconductor material. The spent slurry generally contains suspended matter and usually some of these particles are in colloidal suspension. The original polishing slurry may contain colloids and the polishing process may act as a colloid mill to produce very fine particles in colloidal suspension from the substrate to be polished. A colloid normally contains particles less than 10 micron in diameter, and CMP slurries may have particle diameters less than 500 nm in colloidal suspension. Mechanical filters are not able to filter out such particles. As the most common semiconductor wafer is made from silicon, the spent slurry usually contains some silica particles in colloidal suspension.

The spent slurry is discharged via conduit 2 into an electrolytic cell reactor 8. Cell reactor 8 includes at least two main electrodes 9, 10 connected to respective polarities of a DC generator (not shown). In one embodiment of the present invention the electrodes 9, 10 are non-soluble during electrolysis. The electrodes 9, 10 may be made of graphite or stainless steel. Located between the electrodes 9, 10 is at least one electrolytically soluble intermediate electrode 11, 12 which is not connected to the DC generator. The at least one intermediate electrode 11, 12 is placed between the electrodes 9, 10 and is influenced by the electric current flowing in the electrolytic cell reactor 8 between the electrode 9 and the electrode 10. The intermediate soluble electrode 11, 12 is preferably made of aluminium. An electrolytically soluble electrode means in accordance with this invention that the parts of the electrode surface dissolve into solution in the electrolytic cell reactor 8 due to the effect of the electric current influencing the electrode.

In a preferred embodiment of the present invention at least a part of one of the main electrodes 9, 10 connected to the DC generator is electrolytically soluble, e.g. made of aluminium. In this case, intermediate electrodes 11, 12 need not be provided. If intermediate electrodes 11, 12 are used these may also be electrolytically soluble.

To improve electrolysis an electrolysis aid may be added from a storage container 14 into the electrolysis cell reactor 8 via conduit 15. Suitable electrolysis aids may be an electrolyte such as ammonium chloride or alkali metal chlorides. For instance, using aluminium electrodes 9, 10 for electrolysis, a maximum of 0.2% by weight of NH₄ Cl may be added to the slurry.

During electrolysis it is preferable if the slurry is stirred by means of a stirrer 13. An electrode current density greater than 0.03 amps/cm² is preferred and more preferably in the range 0.03 to 0.2 amps/cm². An electrode current consumption in the range 0.1 to 2 Ah/dm³, in particular 0.2 to 0.8 Ah/dm³ is preferred to complete each electrocoagulation process.

One advantage of the method according to the present invention is that the electrocoagulation is relatively independent of the pH of the spent slurry. Generally, the pH may lie in the range of 4 to 12. Optionally, the pH of the slurry may be stabilised (not shown) before entry into the electrolytic cell, but the invention is not limited thereto.

The temperature of the slurry in the electrolysis cell 8 may be raised by means of a heater 40. Raising the temperature may increase the rate of coagulation.

After electrolysis the partly or completely precipitated slurry is transferred to a settling/filtration unit 22. Here the cleansed liquid 23 may be separated gravimetrically from the solids 24 and either recycled via conduit 27 to the CMP processing unit 1 or discharged via conduit 28 into an alternative clean water system 29. In accordance with the present invention, the recycled water after the coagulation and settling steps in the electrolytic cell 8 and the settling tank 22, respectively, is free of suspended matter from the polishing slurry to within parts per million of impurities. Optionally, the water discharged form the settling tank 22 may be filtered if necessary (not shown) and optionally deionised (not shown) before recycling. The gravimetric separation in settling tank 22 may be accelerated by centrifuging (not shown). Optionally or additionally, the slurry may be actively filtered (not shown).

To assist in the settling process in tank 22, inclined plates 32 may be provided. As the coagulated solid particles precipitate out of the solution they fall on to the plates 32 and slide downwards to the bottom of the settling tank 22.

The solids 24 are released via valve 25 and may be stored as shown schematically in 26. The solids 26 may be reprocessed via a reprocessing unit 31 and may be remixed with recycled de-ionised water in conduit 27 or fresh deionised water and reintroduced into the CMP processing unit 1.

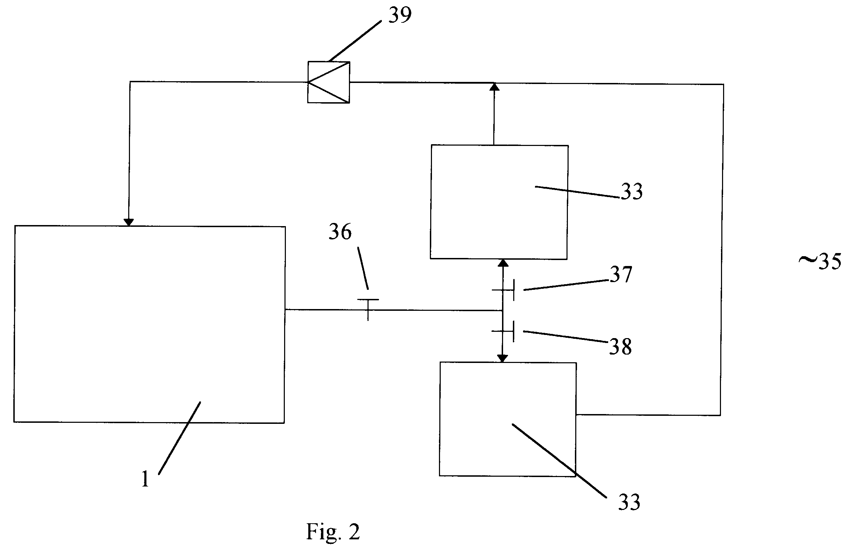

Figure 2 shows a diagrammatic arrangement of a dual batch slurry treatment and recycling plant 35. The spent slurry from CMP unit 1 is transferred to a first of the two treatment plants 33 by opening valve 36 and the appropriate one of valves 37, 38 and pumping a quantity of slurry required to fill the electrolysis cell reactor 8 in the first treatment plant 33. While the electrocoagulated slurry is settling in the first of the treatment plants 33, more spent slurry is transferred from CMP unit 1 to the second plant 33. After settling in the first treatment plant 33, the cleansed water is recycled to the CMP unit 1 and a new charge of spent slurry is transferred to the first treatment plant 33. Similarly, after settling in the second treatment plant 33, the clean water is recycled to the CMP unit 1. The non-return valve 39 prevents flow of recycled water in the reverse direction. Throughput may be increased by providing more than two treatment plants 33 in parallel.

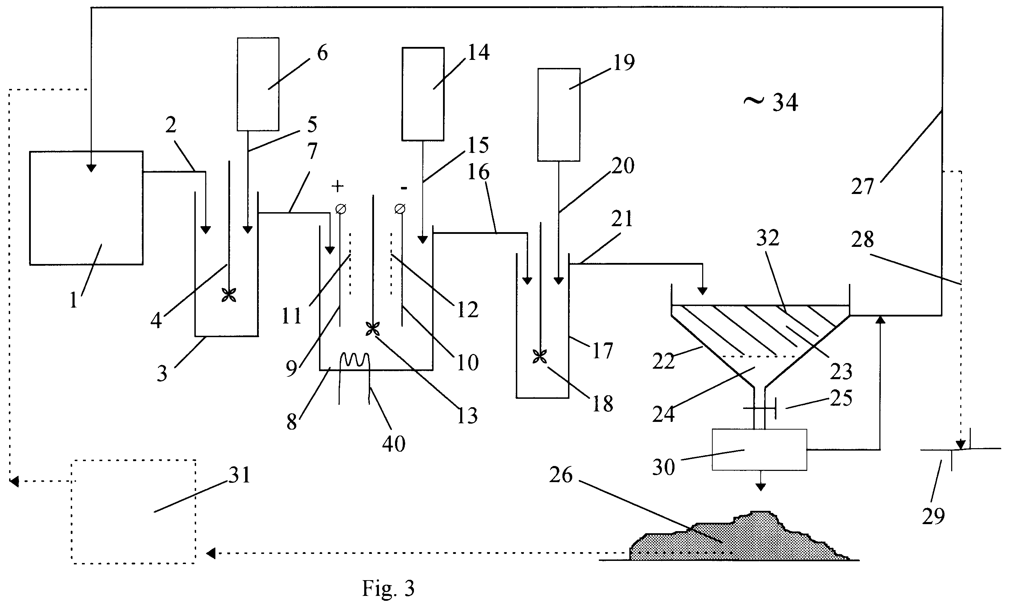

Figure 3 shows a schematic diagram of a slurry treatment and water and/or abrasive recycling plant 34 in accordance with a second embodiment of the present invention. As for the first embodiment, the necessary pumps, valves and gas extraction equipments are not shown. Components with the same reference numbers are the same components as in the first embodiment described with reference to Fig. 1. Treatment plants 34 of the second embodiment may be substitute for the treatment plants 33 in the batch processor described with reference to Fig. 2.

Spent slurry from the CMP processing unit 1 is discharged via a conduit 2 into a first tank 3 in which the pH of the slurry may be stabilised by adding a suitable base, acid or buffer solution from container 6 via conduit 5. The slurry may be stirred by a stirrer 4.

After stabilisation, the slurry is transferred to the electrolytic cell reactor 8. Cell reactor 8 is as described for the first embodiment and is not described further here.

After electrolysis the partly or completely precipitated slurry is transferred to a tank 17 where it may stand for some time to develop the precipitation. Optionally, a flocculant may be added to tank 17 from container 19 via conduit 20 to improve the rate of flocculation. A cationic flocculant such as PK4130 Magna Floc supplied by Allied Colloids is preferred. For instance, 0.20 PPM of cationic flocculant may be added to the slurry in tank 17. If required the slurry may be stirred by stirrer 18.

After flocculation is complete the slurry is transferred to the settling/filtration unit 22. Here the cleansed liquid 23 may be separated gravimetrically from the solids 24, decanted, again filtered if necessary (not shown), optionally deionised (not shown) and either recycled to the CMP processing unit 1 or discharged via conduit 28 into an alternative clean water system 29. The gravimetric separation may be accelerated by centrifuging (not shown). Optionally or additionally, the slurry may be actively filtered by means of a filter 30 such as Whatmann No. 4 or equivalent before the solids 24 are released via valve 25 and stored as shown schematically in 26. The solids 26 may be reprocessed via a reprocessing unit 31 and may be remixed with recycled de-ionised water in conduit 27 or fresh deionised water and reintroduced into the CMP processing unit 1.

### Example

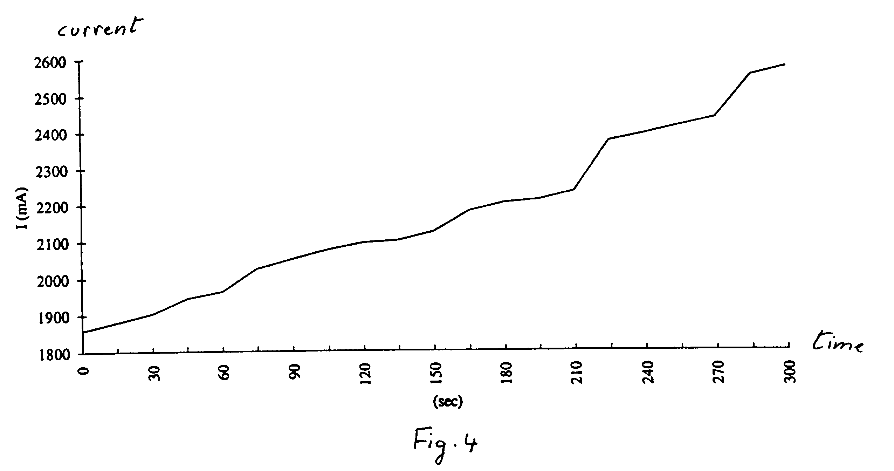

An amount of ammonium chloride representing 0.2% by weight was dissolved in 450 ml of a slurry having 67 mg/litre of suspended matter in water. The slurry was then placed in an electrolysis cell reactor in accordance with the present invention having two flat aluminium electrodes 135 mm long, 44 mm wide and 1.5 mm thick. The two electrodes were lowered about 70 mm into the slurry and placed about 40 mm apart. 34 Volts was applied to the electrodes and the current through the slurry was measured (see Fig. 4). The current density was about 0.061amp/cm² at the start rising to 0.083 amp/cm² at the end of electrolysis. The first precipitation occurred after 180 seconds. After 6 minutes the electrocoagulation was stopped and the precipitate allowed to settle. The slurry was then filtered using a conventional paper filter. The remaining liquid was analysed and the results are given in table 1. The cathode electrode was reduced in weight by 0.02 and the anode by 0.04 g by the electrocoagulation step.

**Table 1**

| Component | amount mg/l | measurement tolerance, mg/l |
|---|---|---|
| Dissolved Aluminium | 0.52 | 0.005 |
| suspended matter | 10 | 1 |
| NH₄⁺ | none detected | |
| Cl⁻ | 1360 | 0.3 |
| SiO₂ | 3.35 | 0.3 |

## Claims

1. Method of separating a liquid and fine particles of abrasive materials from a spent slurry from a process of polishing semiconductor substrates, said slurry including the liquid and a solid content including at least some of the abrasive particles in suspension, comprising the steps of:
step 1: electrolytic coagulation of the solid content of said slurry, and
step 2: separation of the coagulated solids from a recovered liquid part of the slurry.

2. Method according to claim 1, wherein the electrocoagulation step includes using at least one electrode or intermediate electrode having at least a part thereof made from electrolytically soluble material.

3. Method according to claims 1 or 2, wherein the separation step includes addition of a flocculant.

4. Method according to claim 3, wherein the flocculant is a cationic flocculant.

5. Method according to any of claims 2 to 4, wherein the electrolytically soluble electrode or intermediate electrode part is made of aluminium.

6. Method according to any of the preceding claims, wherein the electrolytic coagulation step includes the addition of an electrolysis aid.

7. Method according to claim 6, wherein said electrolysis aid is selected from a group including ammonium chloride, alkali metal chlorides and alkali earth metal chlorides.

8. Method according to any of the preceding claims, wherein the recovered liquid is recycled to the polishing process.

9. Method according to any one of the preceding claims, wherein the temperature of the slurry is raised during the electrocoagulation step.

10. Method according to any of the preceding claims, wherein the polishing process is CMP.

11. Method according to any of the preceding claims, wherein the solid content of the spent slurry includes solid particles in colloidal suspension.

12. Apparatus for separating a liquid and fine particles of abrasive materials from a spent slurry from a process of polishing semiconductor substrates, said slurry including the liquid and a solid content including some of the abrasive particles in suspension, comprising:
an electrolysis cell including at least one electrode or intermediate electrode having at least electrolytically soluble parts for electrolysing and for electrocoagulating said spent slurry, and
a settling tank for separating the coagulated solids from the slurry.

13. Apparatus according to claim 12, wherein said at least one electrolytically soluble electrode part or electrolytically soluble intermediate electrode part is made of aluminium.

14. Apparatus in accordance with any of the previous claims, further comprising means for adding a flocculant to the electrolysed spent slurry.

15. Apparatus according to any of the preceding claims, including means for the addition of an electrolysis aid to the electrolysis cell.

16. Apparatus according to any of the preceding claims, including means to recycle liquid recovered from the settling tank to the polishing process.

17. Use of an electrolytically assisted coagulation step in the separation of fine particles of abrasive materials from spent slurry from a process of polishing semiconductor substrates such as CMP.
